# EUROPEAN PATENT APPLICATION

(11) **EP 4 534 581 A1**
(43) Date of publication of application: **09.04.2025**
(21) Application number: 23816385.1
(22) Date of filing: 01.06.2023
(51) Int. Cl.: C08G 61/12, C08J 5/22, H01M 8/1081, H01M 8/106, H01M 8/18, C25B 13/08, C08G 61/02

(54) **NOVEL BRANCH-CONTAINING POLY(ARYL PIPERIDINIUM) COPOLYMER IONOMER, ANION EXCHANGE MEMBRANE, AND PREPARATION METHOD THEREFOR**

(30) Priority: 03.06.2022 KR 20220067930; 04.10.2022 KR 20220126048
(71) Applicant: IUCF-HYU (Industry-University Cooperation Foundation Hanyang University), Seoul 04763 (KR)
(72) Inventor: LEE, Young Moo, Seoul 06602 (KR); KANG, Nayoon, Seoul 04763 (KR); HU, Chuan, Seoul 04763 (KR); PARK, Jong Hyeong, Seoul 04763 (KR)
(74) Representative: dompatent von Kreisler Selting Werner - Partnerschaft von Patent- und Rechtsanwälten mbB
(86) International application number: PCT/KR2023/007516
(87) International publication number: WO 2023/234725

(57) **Abstract**

The present disclosure relates to a poly(aryl piperidinium) copolymer ionomer which does not have aryl ether bonds in the polymer skeleton and has branch-containing piperidinium groups introduced into repeating units, having excellent chemical stability, excellent mechanical properties while having a high molecular weight, and a low swelling ratio and high dimensional stability and ionic conductivity, and a limited phenyl adsorption effect. In addition, an anion-exchange membrane prepared from the branch-containing poly(aryl piperidinium) copolymer ionomer is operable under low-humidity conditions and is excellent in water management ability, and thus can be applied to membranes and binders for alkaline fuel cells, water electrolysis devices, carbon dioxide reduction, vanadium redox flow batteries, metal-air batteries, etc.

## Description

### [Technical Field]

The present disclosure relates to a novel branched poly(aryl piperidinium) copolymer ionomer, an anion-exchange membrane and a method for preparing the same, more specifically to a technology of synthesizing a poly(aryl piperidinium) copolymer ionomer which does not have aryl ether bonds in the polymer skeleton and has branched piperidinium groups introduced into repeating units, preparing an anion-exchange membrane from the same and applying the same to alkaline fuel cells and water electrolysis devices.

### [Background Art]

Until now, many research have been conducted on polymer electrolyte membrane fuel cells (PEMFCs) owing to their relatively high current density and environmental friendliness. Perfluorocarbon-based proton-exchange membranes represented by Nafion have been mainly used as polymer electrolyte membranes. However, since the use of platinum-based precious metal catalysts is essential for Nafion membranes because of their low oxygen reduction reaction (ORR) activity, research are being carried out actively, including the development of aromatic hydrocarbon-based polymer electrolyte membranes, etc., for replacing Nafion which is very expensive and has a low glass transition temperature.

In this regard, research are being carried out continuously on alkaline membrane fuel cells (AMFCs) and water electrolysis using anion-exchange membranes since it is known that excellent performance and extremely high price competitiveness can be achieved even when inexpensive non-precious metals such as nickel, manganese, etc. are used as electrode catalysts instead of platinum. However, because of poor long-term stability problems caused by the decomposition behavior of hydroxyl radicals and ions during operation, research are needed to improve the durability of the alkaline membrane fuel cells.

As the anion-exchange membrane for use in alkali membrane fuel cells, a synthesis method of introducing a benzyltrimethylammonium group into an aryl ether-based aromatic polymer such as polysulfone (PSF), polyphenyl ether (PPO) or polyether ether ketone (PEEK) is known. This method is advantageous in that the solubility of the polymer is improved as repeating units with aryl ether (C-O) bonds are formed along the polymer main chain. However, since the aryl ether bonds in the polymer main chain decreases long-term stability due to the hydroxyl radical degradation behavior of the electrolyte membrane during operation, it is necessary to improve the durability of the alkaline membrane fuel cell by preventing the decomposition of the polymer main chain.

In addition, since common anion-exchange membranes have limited chemical stability (less than 500 hours in 1 M NaOH solution at 80 °C) and mechanical properties (tensile strength lower than 30 MPa), fuel cells using them have the disadvantages of low power density (0.1-0.5 W cm⁻²) and low durability. Also, due to the high adsorption effect of the phenyl structure, there is a problem that the formation of a three-phase interface is limited, and fuel efficiency is decreased when it is used as a binder.

Furthermore, the moisture permeability of the anion-exchange polymer is very important for water management in anion-exchange membrane fuel cells. While water may overflow at an anode due to electrochemical water generation, a cathode tends to be dry due to water consumption. Therefore, the polymers with high moisture content and swelling ratio greatly affect durability since mass transfer resistance increases and electrochemical stability is hindered.

A poly(aryl piperidinium) copolymer ionomer, which does not have aryl ether bonds in the polymer skeleton and has branched piperidinium groups introduced into repeating units, has not been synthesized yet, and a technology for applying the same to alkaline fuel cell membranes and binders or water electrolysis has not been known specifically.

Therefore, the inventors of the present disclosure have researched consistently to widen the application of aromatic polymer ion-exchange membranes with excellent thermal and chemical stability and mechanical properties. They have tried to solve the problems of conventional anion exchange polymers such as low molecular weight, ion conductivity, moisture content, mechanical properties, power density, durability, etc. by including a piperidinium group containing branched moiety in the repeating unit of an anion-exchange polymer. The present disclosure was completed by synthesizing a poly(aryl piperidinium) copolymer ionomer in which a piperidinium group containing a branched moiety is introduced without aryl ether bonds in the polymer skeleton, preparing an anion-exchange membrane from the same and discovering that it can be applied to alkaline fuel cell membranes and binders for water electrolysis devices, carbon dioxide reduction, vanadium redox flow batteries, metal-air batteries, etc.

### [References of Related Art]

### [Patent Documents]

Patent document 1: Korean Patent Publication No. 10-2018-0121961.
Patent document 2: International Patent Publication No. WO 2019/068051.
Patent document 3: Japanese Patent Publication No. JP 2020-536165.
Patent document 4: US Patent Publication No. US 2019/0036143.

### [Disclosure]

### [Technical Problem]

The present disclosure has been developed in consideration of the above problems. The present disclosure is directed to providing a novel branched poly(aryl piperidinium) copolymer ionomer having excellent chemical stability, high molecular weight, excellent mechanical properties, low swelling ratio, high dimensional stability and ionic conductivity, and limited phenyl adsorption effect and a method for preparing the same.

The present disclosure is also directed to preparing an anion-exchange membrane from a branched poly(aryl piperidinium) copolymer ionomer, so that it can be applied to alkali fuel cell membranes and binders that can be operated even under low-humidity conditions and have excellent water management capability for water electrolysis devices, carbon dioxide reduction, vanadium redox flow batteries, metal-air batteries, etc.

### [Technical Solution]

The present disclosure provides a branched poly(aryl piperidinium) copolymer ionomer having a repeating unit represented by [Chemical Formula 1].

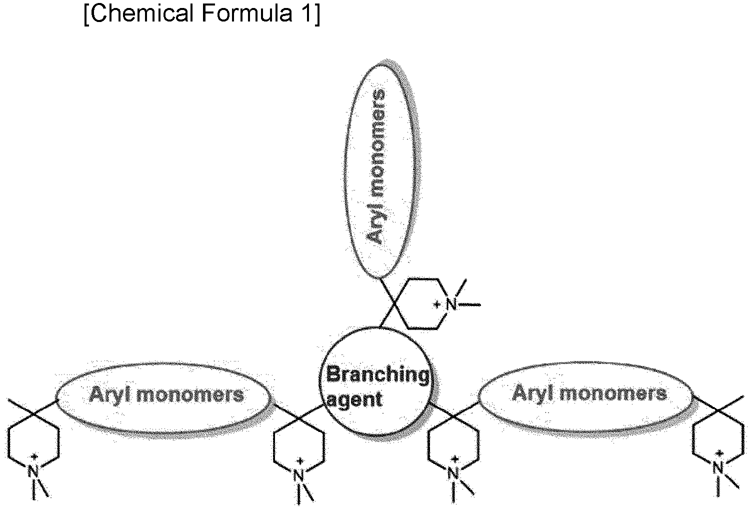

In Chemical Formula 1, Aryl monomers are one or more selected from the compounds represented by the following structural formulas. 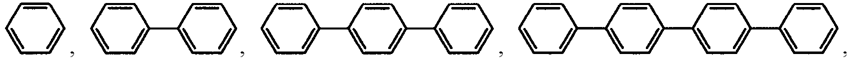 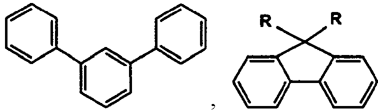 (R = H or CH3), 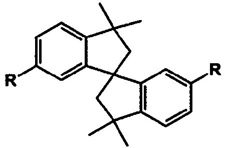 (R=H, OH or C1-5 alkoxy), 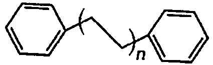 (n is an integer from 1 to 10),

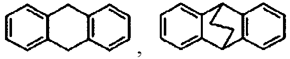

And, branching agent is any one selected from the compounds represented by the following structural formulas.

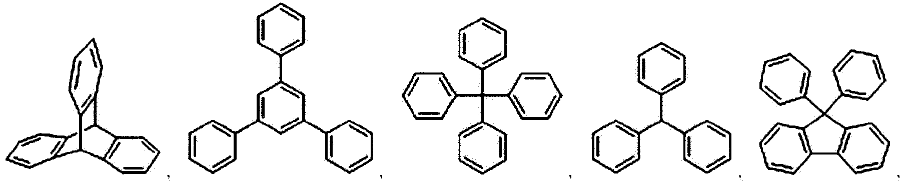

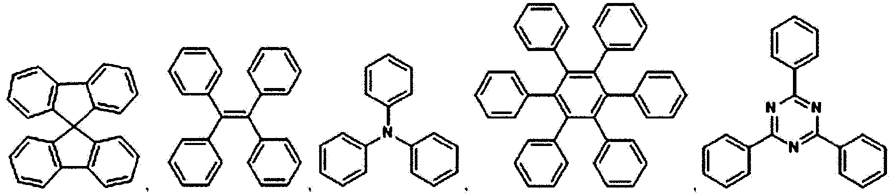

In addition, the present disclosure provides a method for preparing a branched poly(aryl piperidinium) copolymer ionomer, which includes:
(I) a step of forming a solution by dissolving, as monomers, (a) one or more selected from compounds represented by the following structural formulas, 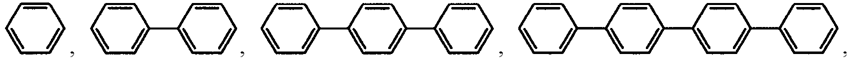 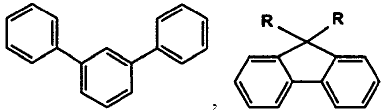 (R = H or CH3), 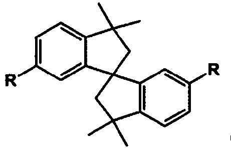 (R=H, OH or C1-5 alkoxy), 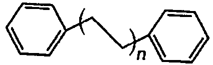 (n is an integer from 1 to 10), 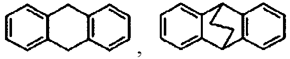 (b) one or more selected from the compounds represented by the following structural formulas, 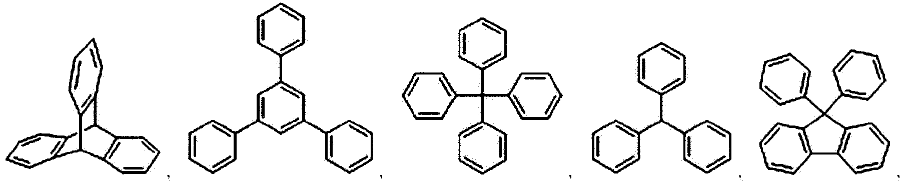 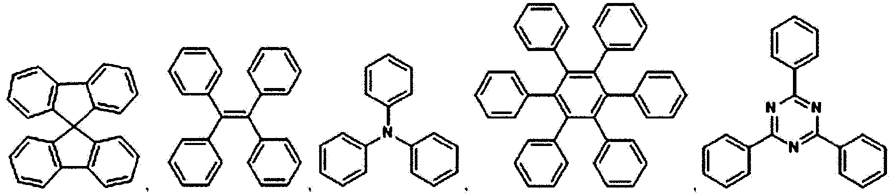 and (c) 1-methyl-4-piperidone in an organic solvent;
(II) a step of obtaining a viscous solution by gradually adding a strong acid catalyst to the solution and stirring the mixture;
(III) a step of obtaining a solid polymer by precipitating, washing and drying the viscous solution;
(IV) a step of forming a quaternary piperidinium salt by adding K₂CO₃ and an excess halomethane to a polymer solution obtained by dissolving the solid polymer in an organic solvent and reacting the same; and
(V) a step of precipitating, washing and drying the polymer solution.

In addition, the present disclosure provides an anion-exchange membrane containing the branch-containing poly(aryl piperidinium) copolymer ionomer.

In addition, the present disclosure provides a method for preparing an anion-exchange membrane, which includes: (i) a step of forming a polymer solution by dissolving the branch-containing poly(aryl piperidinium) copolymer ionomer in an organic solvent; (ii) a step of obtaining a membrane by casting the polymer solution on a glass plate and drying the same; and (iii) a step of treating the obtained membrane with 1 M NaHCO₃ or 1 M NaOH, washing several times with ultrapure water and drying the same.

In addition, the present disclosure provides a binder for an alkaline fuel cell, which contains the branched poly(aryl piperidinium) copolymer ionomer.

In addition, the present disclosure provides an alkaline fuel cell including the anion-exchange membrane.

In addition, the present disclosure provides a water electrolysis device including the anion-exchange membrane.

In addition, the present disclosure provides a carbon dioxide reduction device including the anion-exchange membrane.

In addition, the present disclosure provides a vanadium redox flow battery including the anion-exchange membrane.

In addition, the present disclosure provides a metal-air battery including the anion-exchange membrane.

### [Advantageous Effects]

A novel branched poly(aryl piperidinium) copolymer ionomer according to the present disclosure has excellent chemical stability, high molecular weight and excellent mechanical properties, low swelling ratio, high dimensional stability and ionic conductivity, and limited phenyl adsorption effect.

In addition, since an anion-exchange membrane prepared from the branched poly(aryl piperidinium) copolymer ionomer can be operated even under low-humidity conditions and has excellent water management ability, it can be applied to alkaline fuel cell membranes and binders, water electrolysis devices, carbon dioxide reduction, vanadium redox flow batteries, metal-air batteries, etc.

### [Brief Description of Drawings]

FIG. 1 shows the nuclear magnetic resonance (¹H NMR) spectra of b-PDTM-Trip-x (x = 3.5 or 5) and b-PFBM-Trip-x (x = 3.5 or 5) prepared in Examples 1 to 4.
FIG. 2 shows the nuclear magnetic resonance (¹H NMR) spectra of b-PDTM-Tbp-3.5 and b-PDTP-Tbp-3.5 prepared in Example 5 and b-PFBM-Tbp-3.5 and b-PFBP-Tbp-3.5 prepared in Example 7.
FIG. 3 shows the mechanical properties of an anion-exchange membrane prepared in Example 9 (I⁻ form, prepared from copolymer ionomers obtained in Examples 1 to 8) and anion-exchange membranes prepared in Comparative Examples 1 and 2.
FIG. 4 shows the swelling ratio and water uptake of an anion-exchange membrane prepared in Example 9 (OH⁻ form, prepared from copolymer ionomers obtained in Examples 1 to 8) and anion-exchange membranes prepared in Comparative Examples 1 and 2.
FIG. 5 shows the hydrogen permeability of an anion-exchange membrane prepared in Example 9 (prepared from copolymer ionomers obtained in Examples 1 to 8) and an anion-exchange membrane prepared in Comparative Example 1.
FIG. 6 shows the fuel cell performance of an anion-exchange membrane prepared in Example 9 with different anode and cathode binders of b-PDTP-Trip-5 [binder A/C b-PFBP-Trip-3.5 according to Example 3 and binder A/C b-PFBP-Trip-5 according to Example 4].
FIG. 7 shows the fuel cell performance of b-PDTP-Trip-3.5 and b-PDTP-Trip-5 wherein anode and cathode binders of b-PFBP-Trip-5 according to Example 4 were applied to an anion-exchange membrane prepared in Example 9.
FIG. 8 shows the fuel cell performance of an anion-exchange membrane prepared in Example 9 with different anode and cathode binders of b-PDTP-Trip-3.5 [binder A/C b-PFBP-Trip-3.5 according to Example 3 and binder A/C b-PFBP-Trip-5 according to Example 4] under low-humidity conditions.
FIG. 9 shows the fuel cell performance of b-PDTP-Trip-3.5 and b-PDTP-Trip-5 wherein anode and cathode binders of b-PFBP-Trip-3.5 according to Example 3 were applied to an anion-exchange membrane prepared in Example 9.
FIG. 10 shows the water electrolysis performance of b-PDTP-Trip-5 wherein an anion-exchange membrane prepared in Example 9 was used depending on the content of anode and cathode ionomers.
FIG. 11 shows the long-term stability of an anion-exchange membrane prepared in Example 9 wherein b-PDTP-Trip-5 was used (membrane thickness 50 µm) at 1.5 A cm⁻² and 60 °C for 110 hours.

### [Best Mode]

Hereinafter, a novel branched poly(aryl piperidinium) copolymer ionomer, an anion-exchange membrane and a method for preparing the same according to the present disclosure will be described in detail.

The present disclosure provides a branched poly(aryl piperidinium) copolymer ionomer having a repeating unit denoted by [Chemical Formula 1].

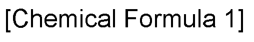

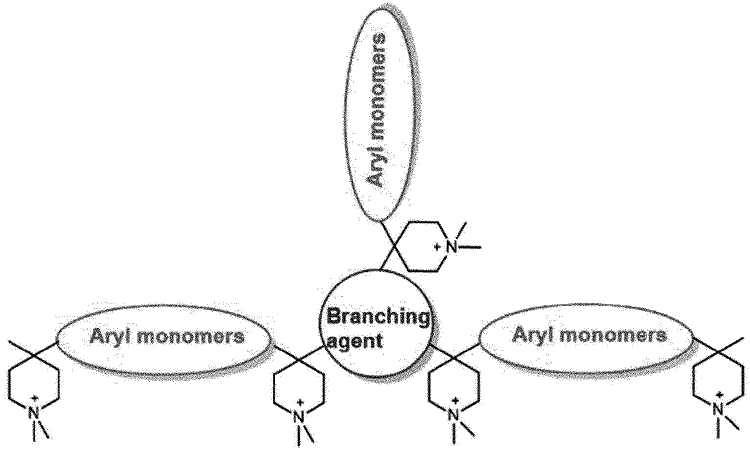

In Chemical Formula 1, Aryl monomers are one or more selected from the compounds represented by the following structural formulas. 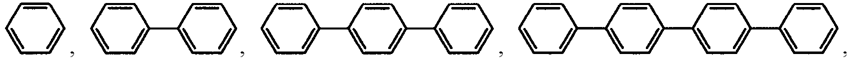 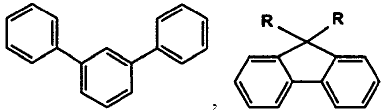 (R = H or CH3), 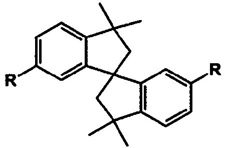 (R=H, OH or C1-5 alkoxy), 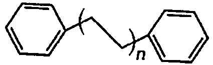 (n is an integer from 1 to 10),

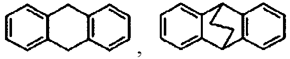

And, Branching agent is any one selected from the compounds represented by the following structural formulas.

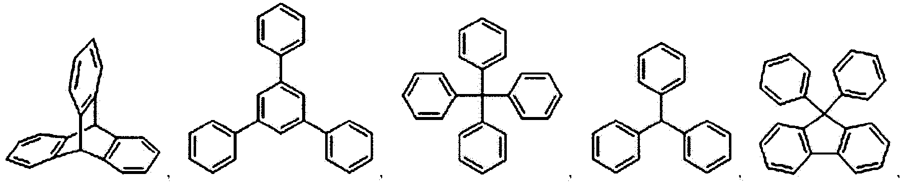

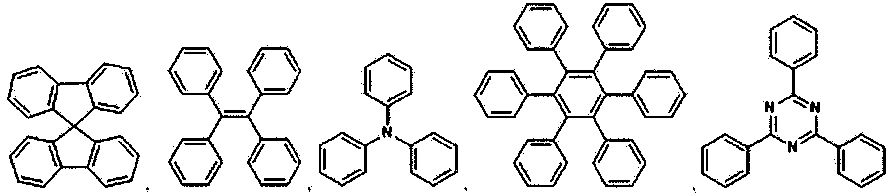

As seen from Chemical Formula 1, the branch-containing poly(aryl piperidinium) copolymer ionomer according to the present disclosure has improved mass transfer capacity of an alkaline fuel cell catalyst layer due to increased free volume of the polymer including a branched moiety. In addition, high water retention capability enables stable operation under low relative humidity conditions and reduces adsorption capacity on the catalyst surface, which contributes to the improvement of fuel cell performance due to the activation of the electrode and increases the stability of the overall system.

In addition, the branched poly(aryl piperidinium) copolymer ionomer basically does not contain aryl ether groups in the polymer skeleton and has excellent chemical stability due to the presence of stable N-heterocyclic ammonium groups. Furthermore, it also has high molecular weight and superior durability and mechanical properties as compared to linear polymers.

In addition, the present disclosure provides a method for preparing a branched poly(aryl piperidinium) copolymer ionomer, which includes:
(I) a step of forming a solution by dissolving, as monomers, (a) one or more selected from compounds represented by the following structural formulas, 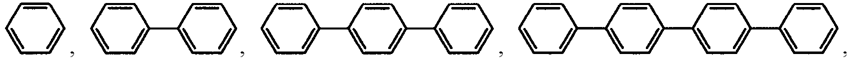 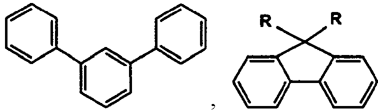 (R = H or CH3), 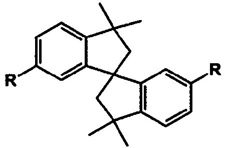 (R=H, OH or C1-5 alkoxy), 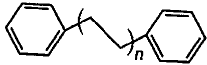 (n is an integer from 1 to 10), 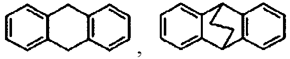 (b) one or more selected from the compounds represented by the following structural formulas, 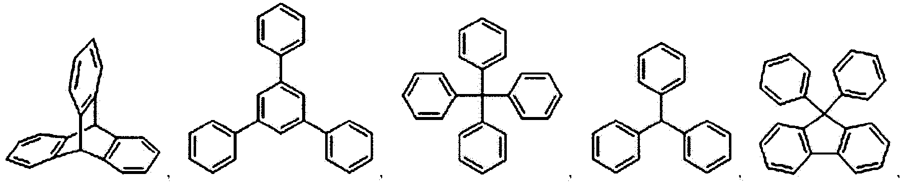 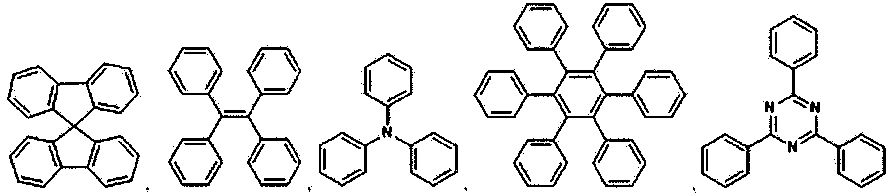 and (c) 1-methyl-4-piperidone in an organic solvent;
(II) a step of obtaining a viscous solution by gradually adding a strong acid catalyst to the solution and stirring the mixture;
(III) a step of obtaining a solid polymer by precipitating, washing and drying the viscous solution;
(IV) a step of forming a quaternary piperidinium salt by adding K₂CO₃ and an excess halomethane to a polymer solution obtained by dissolving the solid polymer in an organic solvent and reacting the same; and
(V) a step of precipitating, washing and drying the polymer solution.

The organic solvent in the step (I) may be one or more halogen-based solvent selected from a group consisting of dichloromethane, chloroform, dichloroethane, dibromomethane and tetrachloroethane. Specifically, dichloromethane may be used.

And, the strong acid catalyst in the step (II) may be trifluoroacetic acid, trifluoromethanesulfonic acid, pentafluoroethanesulfonic acid, heptafluoro-1-propanesulfonic acid, perfluoropropionic acid, heptafluorobutyric acid or a mixture thereof. Specifically, a mixture of trifluoroacetic acid and trifluoromethanesulfonic acid may be used.

And, the organic solvent in the step (IV) may be N-methyl pyrrolidone, dimethyl acetamide, dimethyl sulfoxide or dimethyl formamide.

Also, in the step (IV), the polymer is reacted with a halomethane to form a quaternary piperidinium salt. Fluoromethane, chloromethane, bromomethane or iodomethane, specifically iodomethane, may be used as the halomethane.

In addition, the present disclosure provides an anion-exchange membrane containing the branched poly(aryl piperidinium) copolymer ionomer.

The anion-exchange membrane according to the present disclosure has excellent chemical stability due to the structure of the copolymer ionomer having N-heteroammonium groups while having no aryl ether bond in the polymer skeleton. In addition, due to the structure in which the branched moiety is introduced, it not only has high molecular weight, excellent dimensional stability, and mechanical properties, but also has a unique effect of suppressing the swelling ratio while having high ionic conductivity.

In addition, the present disclosure provides a method for preparing an anion-exchange membrane, which includes (i) a step of forming a polymer solution by dissolving the branched poly(aryl piperidinium) copolymer ionomer in an organic solvent; (ii) a step of obtaining a membrane by casting the polymer solution on a glass plate and drying the same; and (iii) a step of treating the obtained membrane with 1 M NaHCO₃ or 1 M NaOH, washing several times with ultrapure water and drying the same.

The organic solvent in the step (i) may be N-methyl pyrrolidone, dimethyl acetamide, dimethyl sulfoxide or dimethyl formamide.

And, the concentration of the polymer solution may be specifically 2 to 30 wt%, more specifically 3.0 to 5.0 wt%. If the concentration of the polymer solution is below 2 wt%, the ability of forming a membrane may decrease. And, if it exceeds 30 wt%, the physical properties of the membrane may deteriorate after preparation because the viscosity increases greatly.

And, specifically, the drying in the step (ii) may be performed by gradually removing the organic solvent in an oven at 80 to 90 °C for 24 hours and then completely removing the organic solvent by heating it in a vacuum oven at 120 to 150 °C for 12 hours.

Subsequently, the branched poly(aryl piperidinium) copolymer ionomer membrane obtained through the steps (i) to (ii) in halide form (I⁻ form, etc.) may be converted to an anion-exchange membrane in HCO₃⁻ or OH⁻ form with by treating with 1 M NaHCO₃ or 1 M NaOH.

In addition, the present disclosure provides a binder for an alkaline fuel cell, which contains the branched poly(aryl piperidinium) copolymer ionomer.

In addition, the present disclosure provides an alkaline fuel cell including the anion-exchange membrane.

In addition, the present disclosure provides a water electrolysis device including the anion-exchange membrane.

In addition, the present disclosure provides a carbon dioxide reduction device including the anion-exchange membrane.

In addition, the present disclosure provides a vanadium redox flow battery including the anion-exchange membrane.

In addition, the present disclosure provides a metal-air battery including the anion-exchange membrane.

Hereinafter, examples and comparative examples according to the present disclosure will be explained in detail referring to the attached drawings.

### [Examples 1 and 2] Preparation of triptycene branched poly(aryl piperidinium) copolymer ionomer

Diphenylethane [DP, 6.75 mmol (1.23 g)], p-terphenyl [TP, 20.25 mmol (4.663 g)], triptycene [1 mmol (0.254 g)] and 1-methyl-4-piperidone [MP, 34.2 mmol (3.87 g)] were added to a 100-mL reactor as monomers. Then, a solution was formed by dissolving the monomers while adding dichloromethane (DCM, 24 mL) under stirring. After cooling the solution to -1 °C, a mixture of trifluoroacetic acid (TFA, 3.6 mL) and trifluoromethanesulfonic acid (TFSA, 30 mL) was slowly added to the solution. The mixture was stirred and reacted for 2 hours to obtain a viscous solution. The viscous solution was precipitated by pouring to distilled water, washed several times with deionized water and dried in an oven at 80 °C for 24 hours to prepare a triptycene branched poly(diphenyl-co-terphenyl N-methyl piperidine) copolymer in solid phase (yield 92%), which was named b-PDTM-Trip-3.5.

Next, after obtaining a polymer solution by dissolving the prepared b-PDTM-Trip-3.5 (20 mmol) in dimethyl sulfoxide (200 mL), K₂CO₃ (6.9 g, 50 mmol) and iodometane [Mel, 60 mmol (8.46 g)] were added to the polymer solution and reacted at room temperature in a dark room for 24 hours to form a quaternary piperidinium salt. Next, the polymer solution was precipitated in 500 mL of ethyl acetate, filtered, washed several times with deionized water, and completely dried in a convection oven at 80 °C to prepare a triptycene branched poly(diphenyl-co-terphenyl N-methyl piperidine) copolymer ionomer in solid phase (yield 83%), which was named b-PDTP-Trip-3.5. The synthesis pathway is shown in Scheme 1 (Example 1).

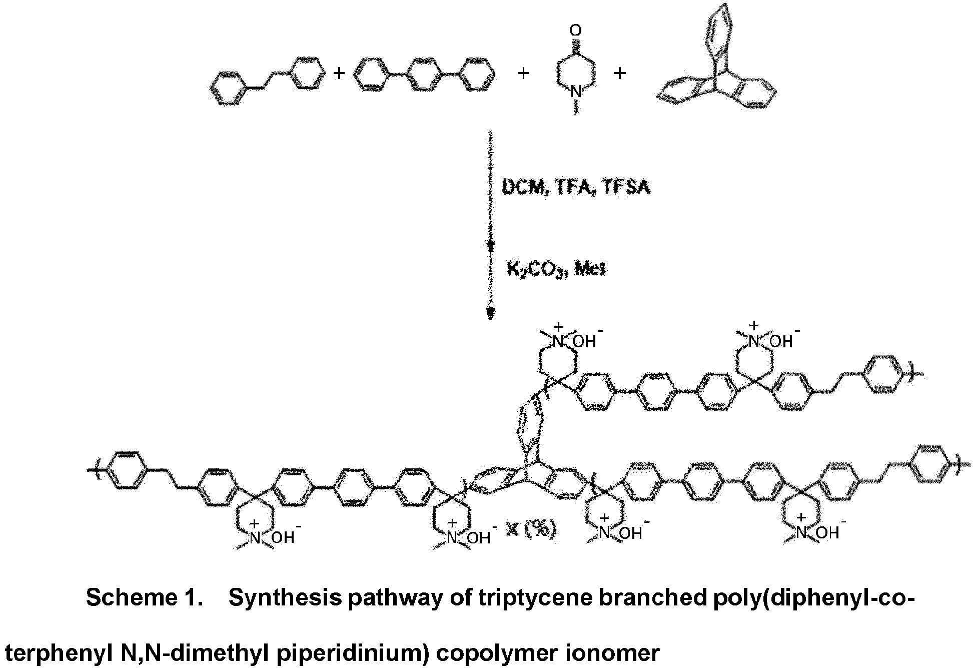

In addition, a triptycene branched poly(diphenyl-co-terphenyl N,N-dimethyl piperidinium) copolymer and its ionomer were prepared in the same manner as in Example 1, by adjusting the molar fraction X (%) of triptycene in Scheme 1 to 5%, and they were named b-PDTM-Trip-5 and b-PDTP-Trip-5, respectively (Example 2).

### [Examples 3 and 4] Preparation of triptycene branched poly(aryl piperidinium) copolymer ionomer

Triptycene branched poly(fluorene-co-biphenyl N,N-dimethyl piperidinium) copolymers and their ionomers were prepared in the same manner as in Examples 1 and 2, except that 9,9'-dimethylfluorene and biphenyl were used as monomers instead of diphenylethane and p-terphenyl, and they were named b-PFBM-Trip-3.5 and b-PFBP-Trip-3.5 (Example 3) and b-PFBM-Trip-5 and b-PFBP-Trip-5 (Example 4), respectively. The synthesis pathway is shown in Scheme 2 (A triptycene branch-containing poly(fluorene-co-terphenyl N, N-dimethyl piperidinium) copolymer and its ionomer were also prepared using p-terphenyl of Example 1 instead of biphenyl as in Example 4, which were named b-PFTM-Trip-5 and b-PFTP-Trip-5, respectively).

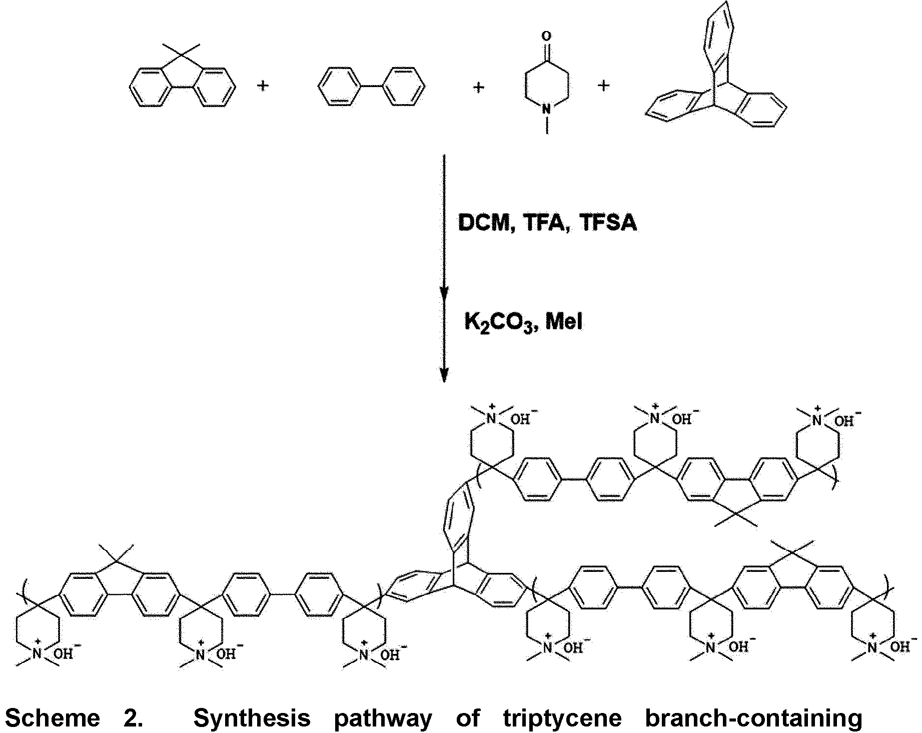

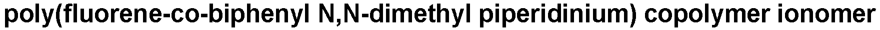

### [Examples 5 and 6] Preparation of 1,3,5-triphenylbenzene branched poly(aryl piperidinium) copolymer ionomer

1,3,5-triphenylbenzene branch-containing poly(diphenyl-co-terphenyl N,N-dimethyl piperidinium) copolymers and their ionomers were prepared in the same manner as in Example 1, except that 1,3,5-triphenylbenzene was used as a monomer instead of triptycene, and they were named b-PDTM-Tpb-3.5 and b-PDTP-Tbp-3.5 (Example 5) and b-PDTM-Tbp-5 and b-PDTP-Tbp-5 (Example 6), respectively. The synthesis pathway is shown in Scheme 3.

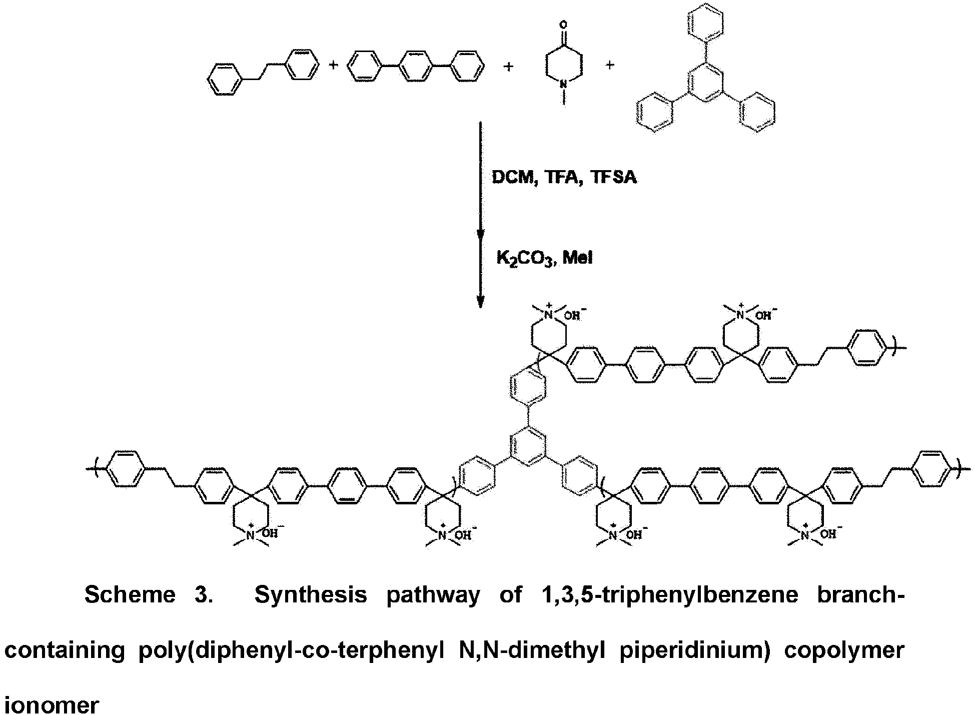

### [Examples 7 and 8] Preparation of 1,3,5-triphenylbenzene branched poly(aryl piperidinium) copolymer ionomer

1,3,5-triphenylbenzene branch-containing poly(fluorene-co-biphenyl N,N-dimethyl piperidinium) copolymers and their ionomers were prepared in the same manner as in Example 3, except that 1,3,5-triphenylbenzene was used as a monomer instead of triptycene, and they were named b-PFBM-Tpb-3.5 and b-PFBP-Tbp-3.5 (Example 7) and b-PFBM-Tpb-5 and b-PFBP-Tbp-5 (Example 8), respectively. The synthesis pathway is shown in Scheme 4.

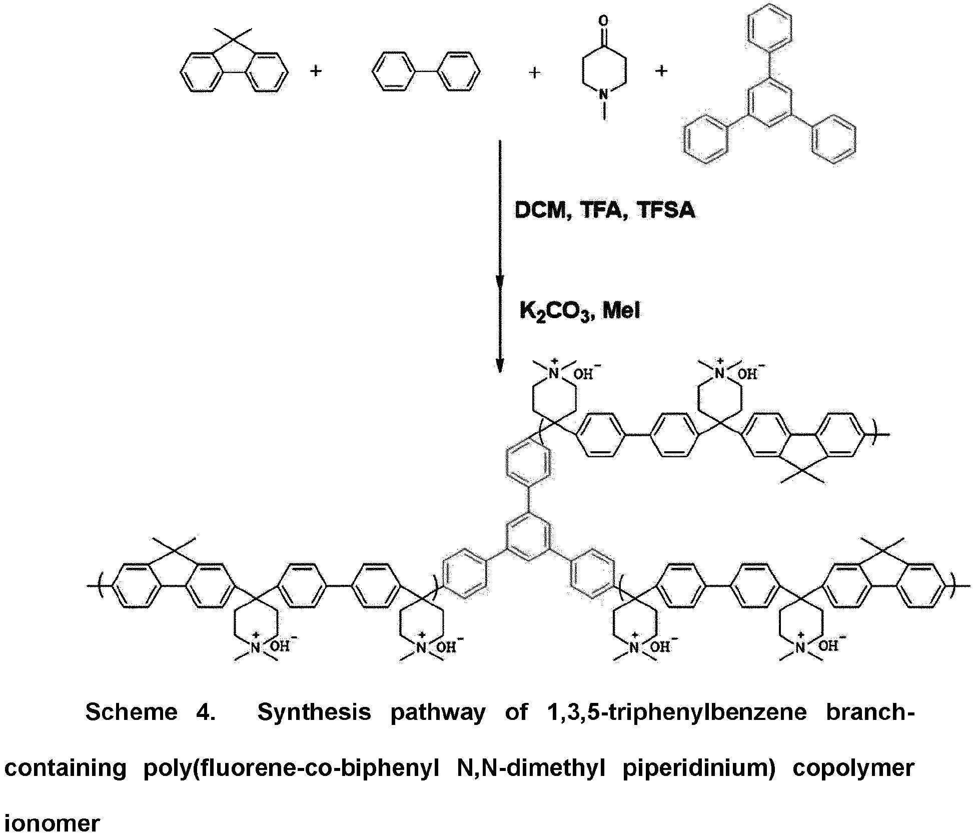

### [Example 9] Preparation of anion-exchange membrane from branched poly(aryl piperidinium) copolymer ionomer

The branch-containing poly(aryl piperidinium) copolymer ionomer (1.7 g) prepared in Examples 1 to 8 was dissolved in dimethyl sulfoxide to form a polymer solution with a concentration of 4 wt%. The polymer solution was then filtered with a 0.45-µm PTFE filter, and the resulting transparent solution was cast on a 21 × 24 cm glass plate. The casting solution was dried in an oven at 90 °C for 24 hours to gradually remove the solvent, and then a membrane (I⁻ form, thickness 25 ± 5 µm) was obtained by heating in a vacuum oven at 140 °C for 12 hours to completely remove the solvent.

The obtained membrane in I⁻ form was immersed in 1 M NaOH aqueous solution for 24 hours to convert the counter ions to OH⁻and washed several times with ultrapure water and then dried to prepare an anion-exchange membrane (The obtained anion-exchange membrane sample was named in the same manner as for the branched poly(aryl piperidinium) copolymer ionomers prepared in Examples 1 to 8).

### [Comparative Example 1] Preparation of anion-exchange membrane from poly(aryl piperidinium) copolymer ionomer not containing branching moiety

An anion-exchange membrane not containing a branching moiety was prepared by forming a poly(diphenyl-co-terphenyl N, N-dimethyl piperidinium) copolymer ionomer obtained in the same manner as in Example 1 into a membrane in the same manner as in Example 9, except that triptycene was not used as a monomer, and it was named PDTP.

### [Comparative Example 2] Preparation of anion-exchange membrane from poly(aryl piperidinium) copolymer ionomer not containing branching moiety

An anion-exchange membrane not containing a branching moiety was prepared by forming a poly(fluorene-co-biphenyl N, N-dimethyl piperidinium) copolymer ionomer obtained in the same manner as in Example 3 into a membrane in the same manner as in Example 9, except that triptycene was not used as a monomer, and it was named PFBP.

### [Test Example]

Test data such as the mechanical properties, water uptake, swelling ratio, fuel cell performance, etc. of the anion-exchange membranes prepared in the examples and comparative examples of the present disclosure were measured and evaluated using the methods described in Korean Patent Publication No. 10-2021-0071810 filed by the inventors of the present disclosure.

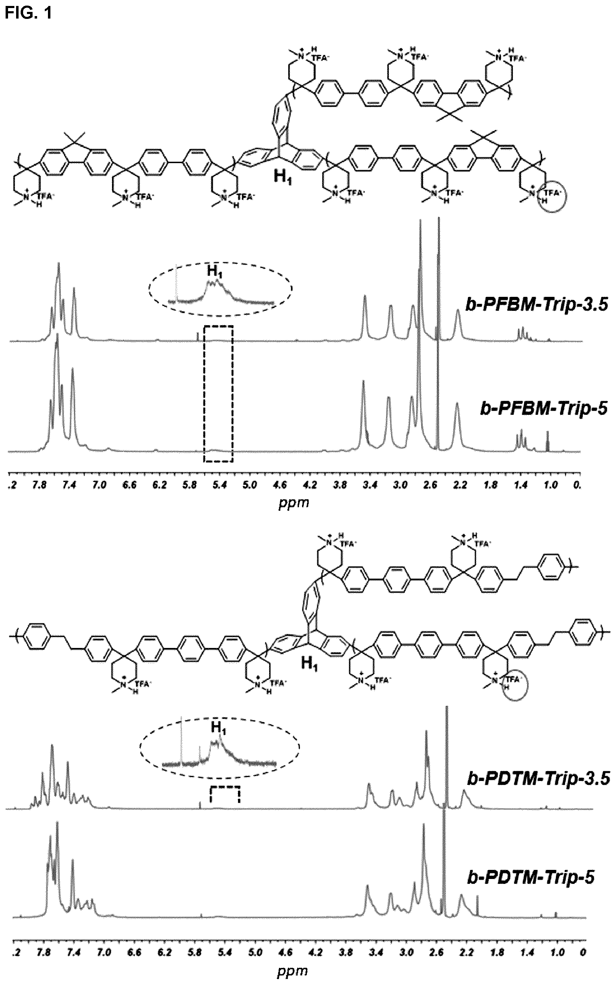

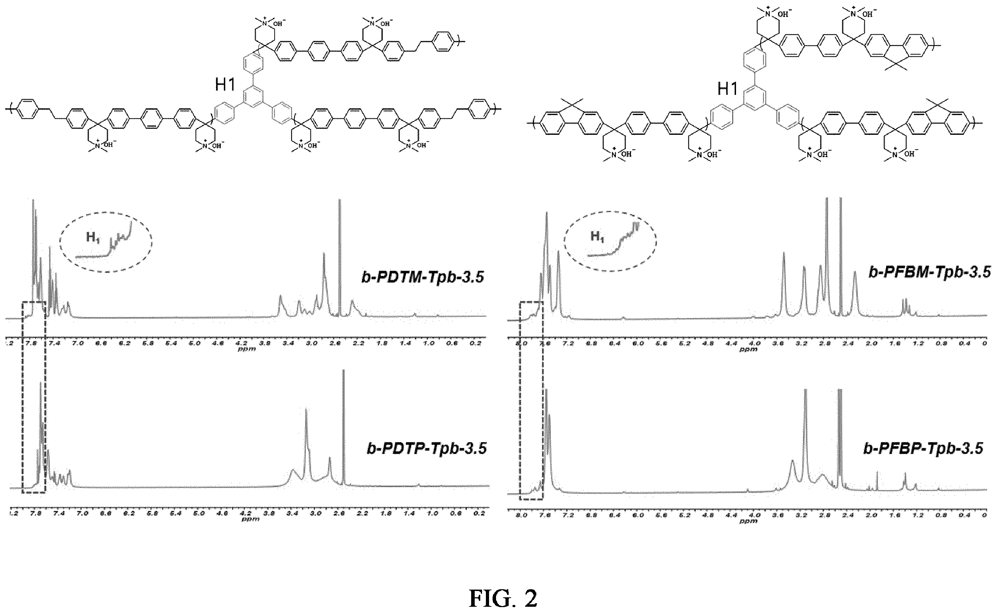

FIG. 1 shows the nuclear magnetic resonance (¹H NMR) spectra of b-PDTM-Trip-x (x = 3.5 or 5) and b-PFBM-Trip-x (x = 3.5 or 5) prepared in Examples 1 to 4, and FIG. 2 shows the nuclear magnetic resonance (¹H NMR) spectra of b-PDTM-Tbp-3.5 and b-PDTP-Tbp-3.5 prepared in Example 5 and b-PFBM-Tbp-3.5 and b-PFBP-Tbp-3.5 prepared in Example 7. The characteristic peak of triptycene was observed at 5.49 ppm and the characteristic peak of 1,3,5-triphenylbenzene was observed at 7.8 ppm, confirming the synthesis of the branched poly(aryl piperidinium) copolymers.

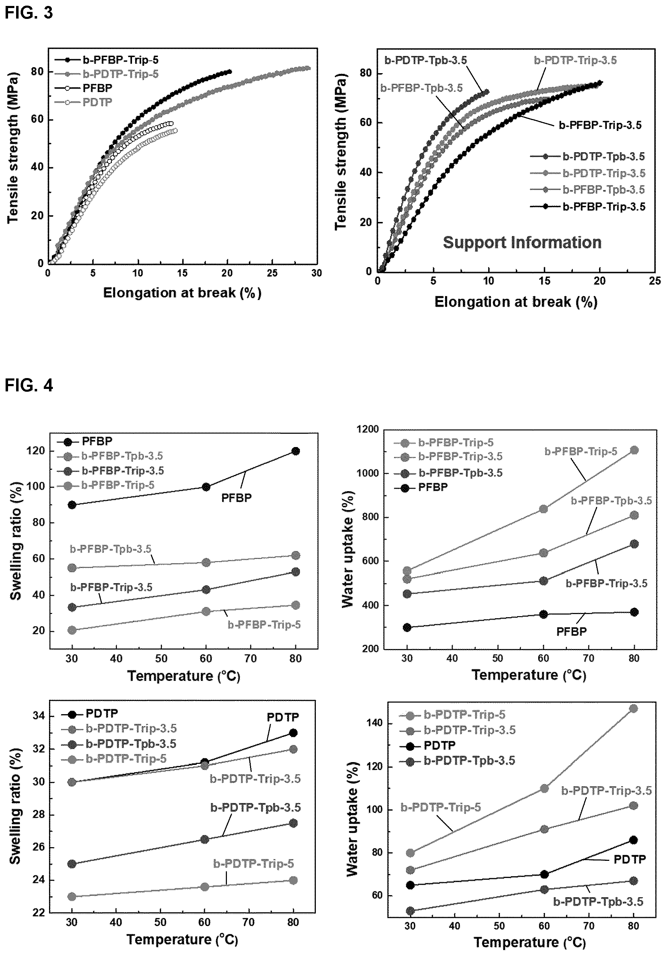

FIG. 3 shows the mechanical properties of the anion-exchange membrane prepared in Example 9 (I⁻ form, prepared from the copolymer ionomers obtained in Examples 1 to 8) and the anion-exchange membranes prepared in Comparative Examples 1 and 2.

Due to the structure containing the branching moiety according to the embodiment of the present disclosure and the increased molecular weight and intertwined structure, tensile strength and elongation were higher as compared to the comparative examples not containing the branch moiety, and the increased mechanical strength contributes to the improvement of cell performance and durability.

FIG. 4 shows the swelling ratio and water uptake of the anion-exchange membrane prepared in Example 9 (OH⁻ form, prepared from copolymer ionomers obtained in Examples 1 to 8) and the anion-exchange membranes prepared in Comparative Examples 1 and 2.

The branch-containing copolymer ionomer membrane according to the present disclosure showed lower swelling ratio and higher water uptake than the conventional copolymer ionomer membranes not containing the branching moiety due to its high molecular weight, supramolecular chain-threading, interlocking reaction, pi-pi stacking interaction, high ion exchange capacity (IEC) and improved free volume.

In general, swelling ratio increases when water uptake and ion conductivity are high. Although the branched copolymer ionomer membrane according to the present disclosure exhibits high water uptake, desired physical properties can be achieved as the swelling ratio can be suppressed due to the branching moiety.

In other words, the structure containing the branching moiety of the present disclosure can solve the dilemma between ion conductivity and swelling ratio due to the high water uptake and improved dimensional stability and mechanical strength of the anion-exchange membrane.

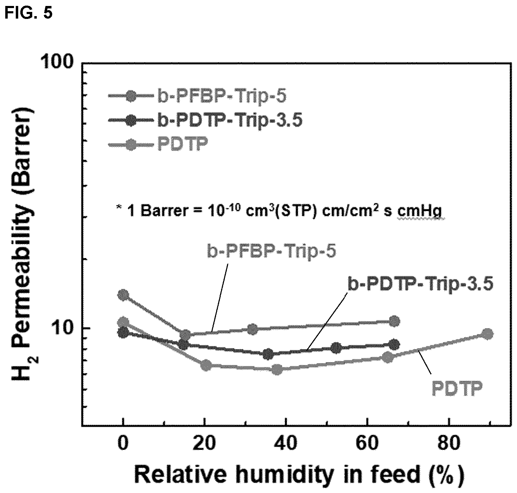

FIG. 5 shows the hydrogen permeability of the anion-exchange membrane prepared in Example 9 (prepared from the copolymer ionomers obtained in Examples 1 to 8) and the anion-exchange membrane prepared in Comparative Example 1.

Due to the improved free volume of the rigid branched structure according to the present disclosure, the hydrogen permeability of the ionomer used in the catalyst layer was improved. This improved hydrogen permeability can reduce the mass transfer resistance of the reactants during electrochemical reactions and helps to form the three-phase interface of the catalyst layer.

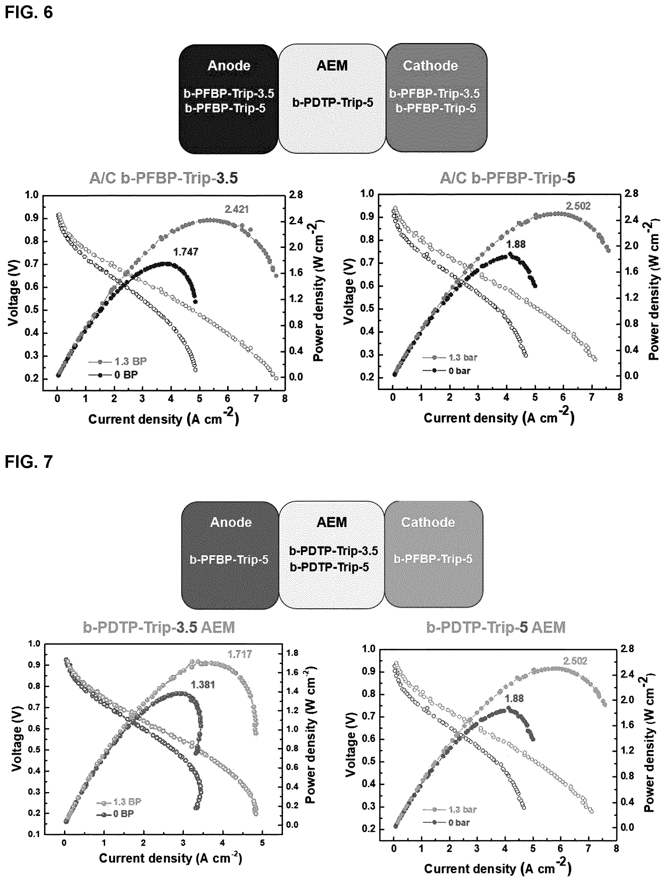

FIG. 6 shows the fuel cell performance of the anion-exchange membrane prepared in Example 9 with different anode and cathode binders of b-PDTP-Trip-5 [binder A/C b-PFBP-Trip-3.5 according to Example 3 and binder A/C b-PFBP-Trip-5 according to Example 4], and FIG. 7 shows the fuel cell performance of b-PDTP-Trip-3.5 and b-PDTP-Trip-5 wherein anode and cathode binders of b-PFBP-Trip-5 according to Example 4 were applied to an anion-exchange membrane prepared in Example 9. They showed superior performance of 2.5 W cm⁻² at high RH, H₂-O₂@80 °C and 1.3 bar, which was similar to that of the pristine structure.

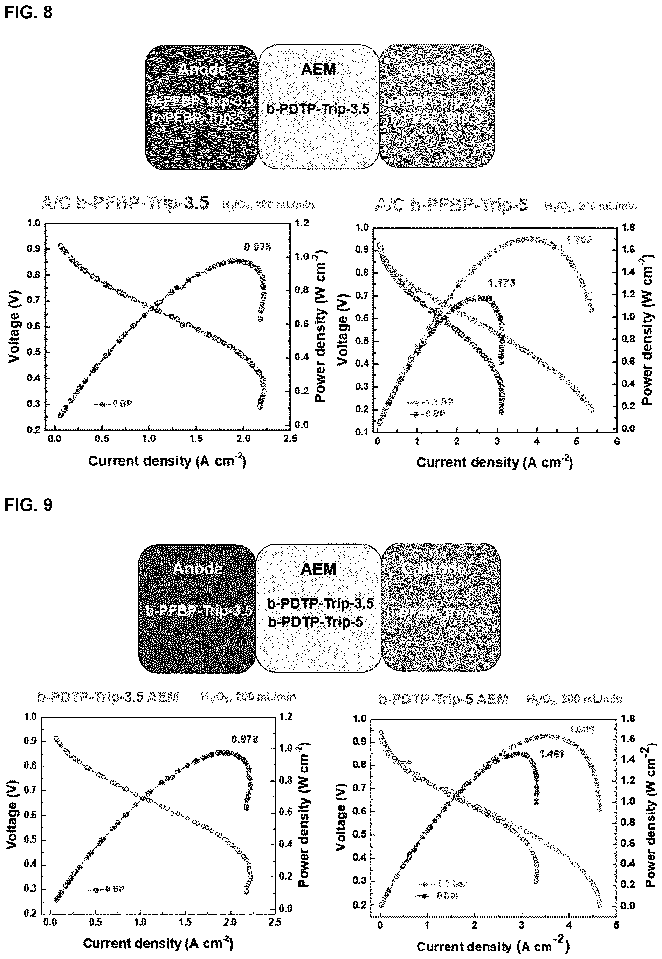

FIG. 8 shows the fuel cell performance of the anion-exchange membrane prepared in Example 9 with different anode and cathode binders of b-PDTP-Trip-3.5 [binder A/C b-PFBP-Trip-3.5 according to Example 3 and binder A/C b-PFBP-Trip-5 according to Example 4] under low-humidity conditions, and FIG. 9 shows the fuel cell performance of b-PDTP-Trip-3.5 and b-PDTP-Trip-5 wherein anode and cathode binders of b-PFBP-Trip-3.5 according to Example 3 were applied to an anion-exchange membrane prepared in Example 9.

They showed superior performance of 1.6 W cm⁻² at low RH, H₂-O₂@80 °C and 1.3 bar, suggesting that excellent fuel cell performance was achieved even at low humidity and low gas flow rate due to the improved free volume, high ion conductivity, high water uptake and improved three-phase interface of the catalyst layer of the branch-containing ionomer according to the present disclosure.

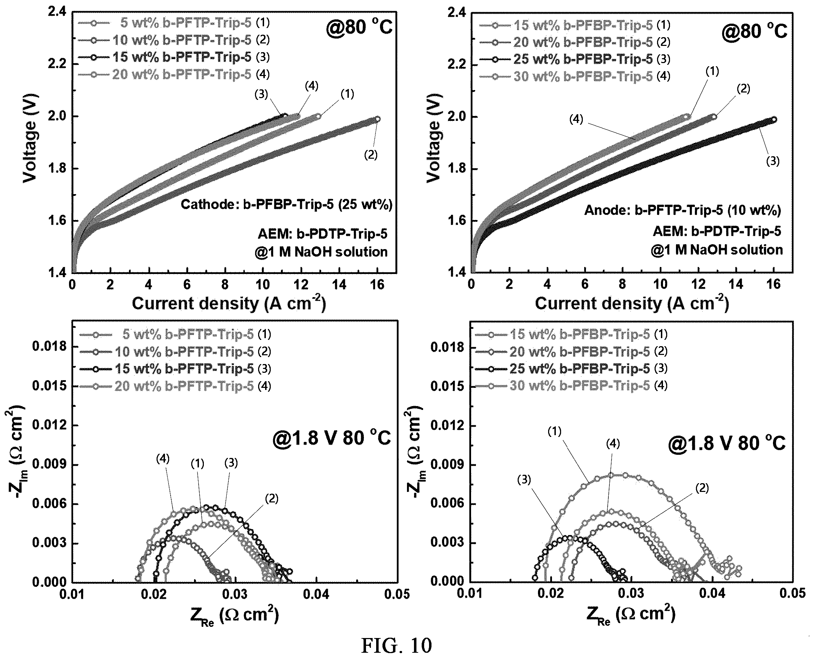

FIG. 10 shows the water electrolysis performance of b-PDTP-Trip-5 wherein the anion-exchange membrane prepared in Example 9 was used depending on the content of anode and cathode ionomers. The b-PDTP-Trip-5 anion-exchange membrane achieved a current density of 16 A cm⁻² at 80 °C and 2.0 V, which corresponds to the highest performance known thus far.

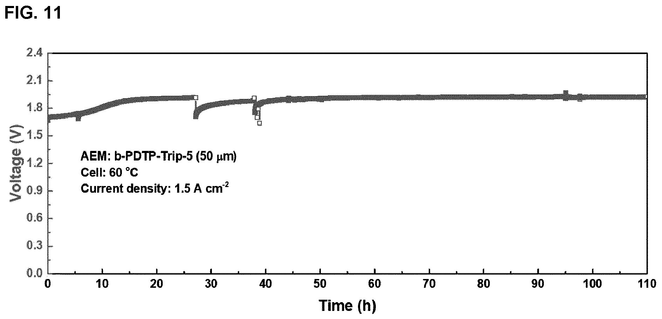

As seen from FIG. 11, it can be seen that the anion-exchange membrane prepared in Example 9 wherein b-PDTP-Trip-5 was used as a membrane (membrane thickness 50 µm) showed long-term stability at 1.5 A cm⁻² and 60 °C for 110 hours.

## Claims

1. A branched poly(aryl piperidinium) copolymer ionomer with repeating units represented by [Chemical Formula 1]: 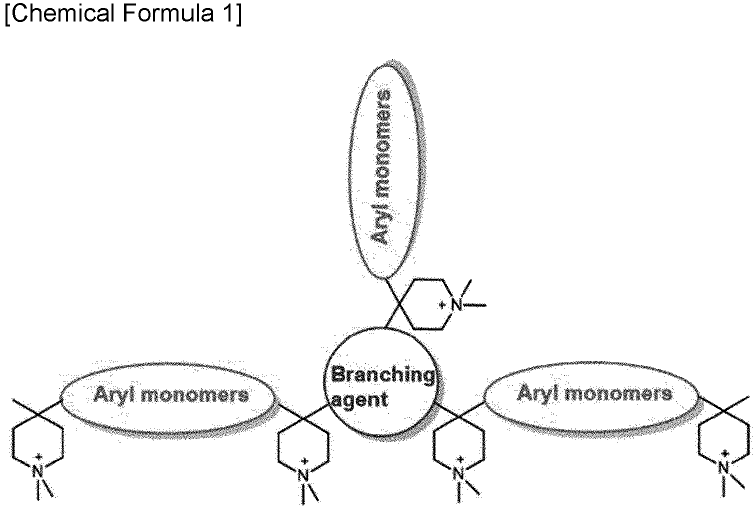
wherein Aryl monomers are one or more selected from the compounds represented by the following structural formulas: and 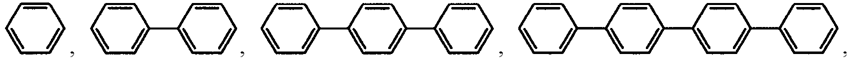 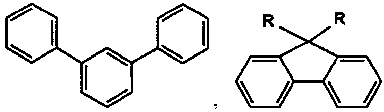 (R = H or CH3), 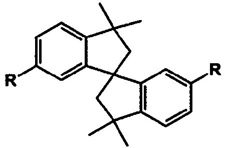 (R=H, OH or C1-5 alkoxy), 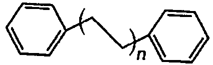 (n is an integer from 1 to 10), 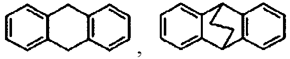
Branching agent is any one selected from the compounds represented by the following structural formulas:

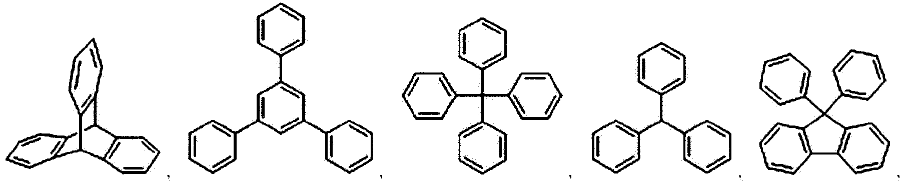

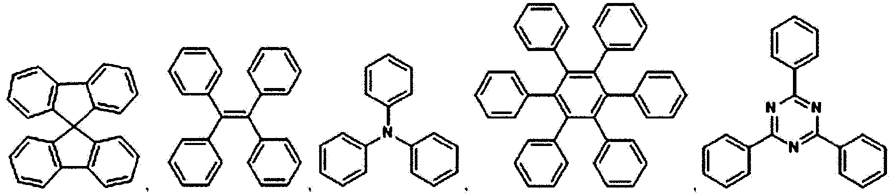

2. A method for preparing a branched poly(aryl piperidinium) copolymer ionomer, comprising:
(I) a step of forming a solution by dissolving, as monomers, (a) one or more selected from compounds represented by the following structural formulas, 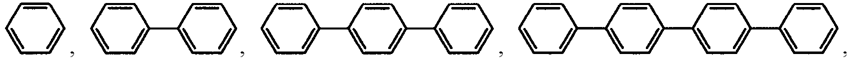 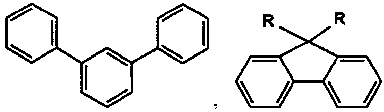 (R = H or CH3), 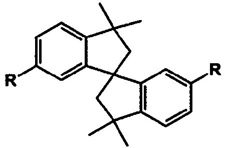 (R=H, OH or C1-5 alkoxy), 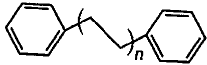 (n is an integer from 1 to 10), 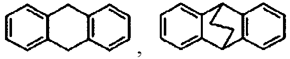 (b) one or more selected from the compounds represented by the following structural formulas, and 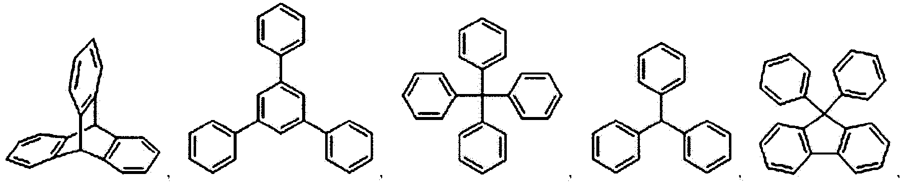 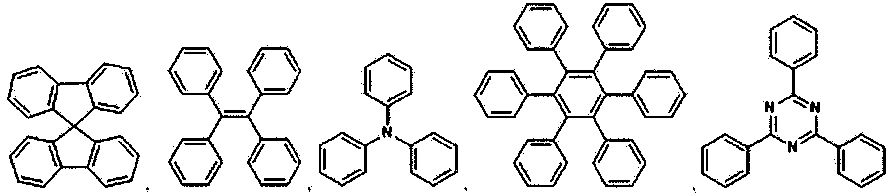 (c) 1-methyl-4-piperidone in an organic solvent;
(II) a step of obtaining a viscous solution by slowly adding a strong acid catalyst to the solution and then stirring and reacting the same;
(III) a step of obtaining a solid polymer by precipitating, washing and drying the viscous solution;
(IV) a step of forming a quaternary piperidinium salt by adding K₂CO₃ and an excess amount of a halomethane to a polymer solution obtained by dissolving the solid polymer in an organic solvent and reacting the same; and
(V) a step of precipitating, washing and drying the polymer solution.

3. The method for preparing a branch-containing poly(aryl piperidinium) copolymer ionomer according to claim 2, wherein the organic solvent in the step (I) is one or more halogen-based solvent selected from a group consisting of dichloromethane, chloroform, dichloroethane, dibromoethane and tetrachloroethane.

4. The method for preparing a branch-containing poly(aryl piperidinium) copolymer ionomer according to claim 2, wherein the strong acid catalyst in the step (II) is trifluoroacetic acid, trifluoromethanesulfonic acid, pentafluoroethanesulfonic acid, heptafluoro-1-propanesulfonic acid, perfluoropropionic acid, heptafluorobutyric acid or a mixture thereof.

5. The method for preparing a branch-containing poly(aryl piperidinium) copolymer ionomer according to claim 2, wherein the organic solvent in the step (IV) is N-methyl pyrrolidone, dimethyl acetamide, dimethyl sulfoxide or dimethyl formamide.

6. An anion-exchange membrane comprising the branched poly(aryl piperidinium) copolymer ionomer according to claim 1.

7. A method for preparing an anion-exchange membrane, comprising: (i) a step of forming a polymer solution by dissolving the banched poly(aryl piperidinium) copolymer ionomer according to claim 1 in an organic solvent; (ii) a step of obtaining a membrane by casting the polymer solution on a glass plate and drying the same; and (iii) a step of treating the obtained membrane with 1 M NaHCO₃ or 1 M NaOH, washing several times with ultrapure water and drying the same.

8. The method for preparing an anion-exchange membrane according to claim 7, wherein the concentration of the polymer solution is 2 to 30 wt%.

9. The method for preparing an anion-exchange membrane according to claim 7, wherein the drying in the step (ii) is performed by gradually removing the organic solvent in an oven at 80 to 90 °C for 24 hours and then completely removing the organic solvent by heating it in a vacuum oven at 120 to 150 °C for 12 hours.

10. A binder for an alkaline fuel cell, comprising the branched poly(aryl piperidinium) copolymer ionomer according to claim 1.

11. An alkaline fuel cell comprising the anion-exchange membrane according to claim 6.

12. A water electrolysis device comprising the anion-exchange membrane according to claim 6.

13. A carbon dioxide reduction device comprising the anion-exchange membrane according to claim 6.

14. A vanadium redox flow battery comprising the anion-exchange membrane according to claim 6.

15. A metal-air battery comprising the anion-exchange membrane according to claim 6.
